# EUROPEAN PATENT APPLICATION

(11) **EP 4 227 794 A1**
(43) Date of publication of application: **16.08.2023**
(21) Application number: 22156526.0
(22) Date of filing: 14.02.2022
(51) Int. Cl.: G06F 3/14, H04M 1/72448, G06F 3/16, G06F 3/01, H04M 1/02, G06F 1/16

(54) **USER DEVICE**

(71) Applicant: Nokia Technologies Oy, 02610 Espoo (FI)
(72) Inventor: LEHTINIEMI, Arto Juhani, Lempäälä (FI); VILERMO, Miikka Tapani, Siuro (FI); LAAKSONEN, Lasse Juhani, Tampere (FI)
(74) Representative: Nokia EPO representatives

(57) **Abstract**

An apparatus, method and computer program is described comprising: receiving first and second content suitable for display on a user device (60), wherein the user device comprises a first display portion (61a) and a second display portion (61b), wherein in a first configuration, the first and second display portions are provided on opposite sides of the user device and are directed in different directions; determining the first content (64) to be primary content or secondary content, wherein the first content comprises a visual component; determining the second content (66) to be primary content or secondary content, wherein the second content comprises a visual component; displaying the visual component of the first content on the first display portion in the event that the first content is primary content; displaying the visual component of the second content on the second display portion in the event that the second content is primary content; and when the user device is in the first configuration, changing content identified as primary content to be identified as secondary content and changing content identified to be secondary content to be identified as primary content in response to the user device being rotated (62) to swap the directions of the first and second display portions.

## Description

### Field

The present specification relates to user devices, such as user devices having multiple display portions.

### Background

User devices, such as mobile communication devices, having multiple display portions are known. Such user devices may have display portions that are directed in different directions and may have foldable displays such that different displays can either be directed in different directions or the same direction. There remains a need for further developments in this field.

### Summary

In a first aspect, this specification describes an apparatus comprising means for performing: receiving first content (e.g. a video call, a meeting, an application and/or interactive content) and second content (e.g. a video call, a meeting, an application and interactive content) suitable for display on a user device, wherein the user device comprises a first display portion and a second display portion, wherein in a first configuration (e.g. a folded configuration), the first and second display portions are provided on opposite sides of the user device and are directed in different directions; determining the first content to be primary content or secondary content, wherein the first content comprises a visual component (e.g. video content); determining the second content to be primary content or secondary content, wherein the second content comprises a visual component (e.g. video content); displaying the visual component of the first content on the first display portion in the event that the first content is primary content; displaying the visual component of the second content on the second display portion in the event that the second content is primary content; and when the user device is in the first configuration, changing content identified as primary content to be identified as secondary content and changing content identified to be secondary content to be identified as primary content in response to the user device being rotated to swap the directions of the first and second display portions. The primary content may be "active" content. The secondary content may be "inactive" content (e.g. on hold).

The first content may comprise a first audio component (e.g. a first video call or meeting). The second content may comprise a second audio component (e.g. a second video call or meeting). The apparatus may further comprise means for performing: outputting the audio component of at least content identified as primary content using the user device. Some example embodiments further comprise means for performing: outputting the audio component of both the first and the second content using the user device.

In some example embodiments, outputting the audio component of both the first and second content using the user device comprises at least one of: outputting one of the first and second audio components using a left earbud, headphone or speaker and outputting the other of the first and second audio components using a right earbud, headphone or speaker; outputting a combination of the first and second audio components using spatial rendering; outputting the first and second audio components at different volumes dependent on whether the respective audio component forms part of primary or secondary content; and/or outputting one of the first and second audio components using earbuds or headphones and outputting the other of the first and second audio components using a loudspeaker.

The apparatus may further comprise means for performing: capturing audio data and/or video data using said user device; and controlling provision of the captured audio and/or video data to at least one of a provider of the first content and a provider of the second content dependent on whether the respective content is primary or secondary content.

Controlling provision of the captured audio and/or video data to at least one of a provider of the first content and a provider of the second content dependent on whether the respective content is primary or secondary content may comprise at least one of: providing the captured audio and/or video data to the provider of first and/or second content in the event that the respective content is primary content; providing neither captured audio nor captured video data to the provider of first and/or second content in the event that the respective content is secondary content; providing the captured video data in blurred form to the provider of first and/or second content in the event that the respective content is secondary content; providing captured video data in a direction away from a user to the provider of first and/or second content in the event that the respective content is secondary content; and/or providing the captured video data including a blurred mouth of a user to the provider of first and/or second content in the event that the respective content is secondary content.

The apparatus may further comprise means for performing: determining a change in user device configuration from the first configuration (e.g. a folded configuration) to a second configuration (e.g. an unfolded configuration), wherein in the second configuration, the first and second display portions are directed in the same direction; and combining the first and second content into a single merged content when the user device configuration changes to the second configuration, wherein, in the second configuration, the merged content is provided as part of a single merged video call, meeting, conference or application. In the first configuration, one of the first and second content may be primary content and the other of the first and second content is secondary content. In the second configuration, both of the first and second content may be primary content.

In some example embodiments, controlling presentation of the first and second content comprises means for performing: presenting primary content on at least one of the first and second display portions of the user device and providing secondary content for display using another device. In some other example embodiments, controlling presentation of the first and second content comprises means for performing: presenting secondary content on at least one of the first and second display portions of the user device and providing primary content for display using another device.

Some example embodiments further comprise means for performing: displaying the visual component of the first and second content on the first and second display portions respectively, regardless of whether said content is primary content or secondary content.

In a second aspect, this specification describes a user device (e.g. a mobile communication device or some other user equipment) comprising a first display portion and a second display portion, wherein in a first configuration, the first and second display portions are provided on opposite sides of the user device and are directed in different directions, wherein the user device comprises means for performing: receiving first content (e.g. a video call, a meeting, an application and/or interactive content) and second content (e.g. a video call, a meeting, an application and interactive content) suitable for display on the user device, wherein the first content comprises a visual component and is primary content or secondary content and the second content comprises a visual component and is primary content or secondary content; displaying the visual component of the first content on the first display portion in the event that the first content is primary content; displaying the visual component of the second content on the second display portion in the event that the second content is primary content; and when the user device is in the first configuration, changing contented identified as primary content to be identified secondary content and changing content identified to be secondary content to be identified as primary content in response to the user device being rotated to swap the directions of the first and second display portions. Some example embodiments further comprise means for performing: displaying the visual component of the first and second content on the first and second display portions respectively, regardless of whether said content is primary content or secondary content.

In the first and second aspects described above, the said means may comprise: at least one processor; and at least one memory including computer program code, the at least one memory and computer program code configured to, with the at least one processor, cause the performance of the apparatus.

In a third aspect, this specification describes a method comprising: receiving first content (e.g. a video call, a meeting, an application and/or interactive content) and second content (e.g. a video call, a meeting, an application and interactive content) suitable for display on a user device, wherein the user device comprises a first display portion and a second display portion, wherein in a first configuration, the first and second display portions are provided on opposite sides of the user device and are directed in different directions; determining the first content to be primary content or secondary content, wherein the first content comprises a visual component; determining the second content to be primary content or secondary content, wherein the second content comprises a visual component; displaying the visual component of the first content on the first display portion in the event that the first content is primary content; displaying the visual component of the second content on the second display portion in the event that the second content is primary content; and when the user device is in the first configuration, changing content identified as primary content to be identified as secondary content and changing content identified to be secondary content to be identified as primary content in response to the user device being rotated to swap the directions of the first and second display portions.

The first content may comprise a first audio component (e.g. a first video call or meeting). The second content may comprise a second audio component (e.g. a second video call or meeting). The method may comprise: outputting the audio component of at least content identified as primary content using the user device. The method may comprise: outputting the audio component of both the first and the second content using the user device.

In some example embodiments, outputting the audio component of both the first and second content using the user device comprises at least one of: outputting one of the first and second audio components using a left earbud, headphone or speaker and outputting the other of the first and second audio components using a right earbud, headphone or speaker; outputting a combination of the first and second audio components using spatial rendering; outputting the first and second audio components at different volumes dependent on whether the respective audio component forms part of primary or secondary content; and/or outputting one of the first and second audio components using earbuds or headphones and outputting the other of the first and second audio components using a loudspeaker.

The method may further comprise: capturing audio data and/or video data using said user device; and controlling provision of the captured audio and/or video data to at least one of a provider of the first content and a provider of the second content dependent on whether the respective content is primary or secondary content.

Controlling provision of the captured audio and/or video data to at least one of a provider of the first content and a provider of the second content dependent on whether the respective content is primary or secondary content may comprise at least one of: providing the captured audio and/or video data to the provider of first and/or second content in the event that the respective content is primary content; providing neither captured audio nor captured video data to the provider of first and/or second content in the event that the respective content is secondary content; providing the captured video data in blurred form to the provider of first and/or second content in the event that the respective content is secondary content; providing captured video data in a direction away from a user to the provider of first and/or second content in the event that the respective content is secondary content; and/or providing the captured video data including a blurred mouth of a user to the provider of first and/or second content in the event that the respective content is secondary content.

The method may further comprise: determining a change in user device configuration from the first configuration (e.g. a folded configuration) to a second configuration (e.g. an unfolded configuration), wherein in the second configuration, the first and second display portions are directed in the same direction; and combining the first and second content into a single merged content when the user device configuration changes to the second configuration, wherein, in the second configuration, the merged content is provided as part of a single merged video call, meeting, conference or application. In the first configuration, one of the first and second content may be primary content and the other of the first and second content is secondary content. In the second configuration, both of the first and second content may be primary content.

In some example embodiments, controlling presentation of the first and second content comprises: presenting primary content on at least one of the first and second display portions of the user device and providing secondary content for display using another device. In some other example embodiments, controlling presentation of the first and second content comprises: presenting secondary content on at least one of the first and second display portions of the user device and providing primary content for display using another device.

Some example embodiments further comprise: displaying the visual component of the first and second content on the first and second display portions respectively, regardless of whether said content is primary content or secondary content.

In a fourth aspect, this specification describes computer-readable instructions which, when executed by a computing apparatus, cause the computing apparatus to perform (at least) any method as described with reference to the third aspect.

In a fifth aspect, this specification describes a computer-readable medium (such as a non-transitory computer-readable medium) comprising program instructions stored thereon for performing (at least) any method as described with reference to the third aspect.

In a sixth aspect, this specification describes an apparatus comprising: at least one processor; and at least one memory including computer program code which, when executed by the at least one processor, causes the apparatus to perform (at least) any method as described with reference to the third aspect.

In a seventh aspect, this specification describes a computer program comprising instructions for causing an apparatus to perform at least the following: receiving first content (e.g. a video call, a meeting, an application and/or interactive content) and second content (e.g. a video call, a meeting, an application and interactive content) suitable for display on a user device, wherein the user device comprises a first display portion and a second display portion, wherein in a first configuration (e.g. a folded configuration), the first and second display portions are provided on opposite sides of the user device and are directed in different directions; determining the first content to be primary content or secondary content, wherein the first content comprises a visual component (e.g. video content); determining the second content to be primary content or secondary content, wherein the second content comprises a visual component (e.g. video content); displaying the visual component of the first content on the first display portion in the event that the first content is primary content; displaying the visual component of the second content on the second display portion in the event that the second content is primary content; and when the user device is in the first configuration, changing content identified as primary content to be identified as secondary content and changing content identified to be secondary content to be identified as primary content in response to the user device being rotated to swap the directions of the first and second display portions.

In an eighth aspect, this specification describes an input (or some other means) for receiving first content (e.g. a video call, a meeting, an application and/or interactive content) and second content (e.g. a video call, a meeting, an application and interactive content) suitable for display on a user device, wherein the user device comprises a first display portion and a second display portion, wherein in a first configuration, the first and second display portions are provided on opposite sides of the user device and are directed in different directions; a control module (or some other means) for determining the first content to be primary content or secondary content, wherein the first content comprises a visual component; a/the control module (or some other means) for determining the second content to be primary content or secondary content, wherein the second content comprises a visual component; a first display portion (or some other means) for displaying the visual component of the first content in the event that the first content is primary content; a second display portion (or some other means) for displaying the visual component of the second content in the event that the second content is primary content; and when the user device is in the first configuration, a/the control module (or some other means) for changing content identified as primary content to be identified as secondary content and changing content identified to be secondary content to be identified as primary content in response to the user device being rotated to swap the directions of the first and second display portions.

### Brief description of the drawings

Example embodiments will now be described, by way of example only, with reference to the following schematic drawings, in which:
FIG. 1 shows a user device that may be used in some example embodiments;
FIG. 2 shows a user device that may be used in some example embodiments;
FIG. 3 is a flow chart showing an algorithm in accordance with an example embodiment;
FIG. 4 shows a user device in accordance with an example embodiment;
FIG. 5 is a flow chart showing an algorithm in accordance with an example embodiment;
FIG. 6 shows a user device in accordance with an example embodiment;
FIGS. 7 to 9 are flow charts showing algorithms in accordance with example embodiments;
FIG. 10 shows a user device in accordance with an example embodiment;
FIG. 11 shows a user device in accordance with an example embodiment;
FIG. 12 is a flow chart showing an algorithm in accordance with an example embodiment;
FIG. 13 is a flow chart showing an algorithm in accordance with an example embodiment;
FIGS. 14 to 17 show systems in accordance with example embodiments;
FIG. 18 is a block diagram of components of a system in accordance with an example embodiment; and
FIG. 19 shows an example of tangible media for storing computer-readable code which when run by a computer may perform methods according to example embodiments described above.

### Detailed description

The scope of protection sought for various embodiments of the invention is set out by the independent claims. The embodiments and features, if any, described in the specification that do not fall under the scope of the independent claims are to be interpreted as examples useful for understanding various embodiments of the invention.

In the description and drawings, like reference numerals refer to like elements throughout.

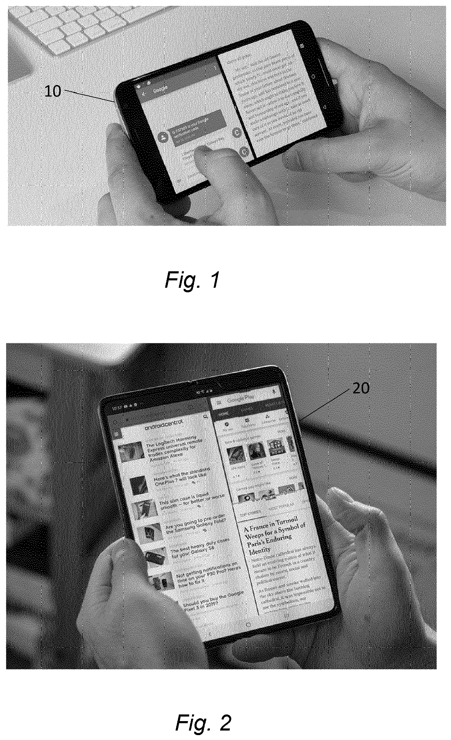

FIG. 1 shows a user device 10 that may be used in some example embodiments. The user device 10 may, for example, be used to consume media, such as making video calls or attending meetings or conferences. The user device 10 may be used to display video content and/or audio content to a user of the device.

FIG. 2 shows a user device 20 that may be used in some example embodiments. The user device 20 is a foldable device and is shown in FIG. 2 in an unfolded configuration.

Both the user device 10 and the user device 20 are shown displaying two applications side-by-side. This enables multitasking by a user of the device. Other mechanisms for supporting multitasking include the provision of copy-paste functionality between applications, picture-in-picture functionality for watching videos while performing tasks with other apps, interactive notifications for easy replies while consuming other content etc.

A user may use a device, such as either of the user devices 10 or 20, to access multiple simultaneous meetings and/or other interactive content or applications. For example, some applications allow running multiple instances at the same time for multitasking.

Foldable and rotatable devices bring new opportunities for user interaction, such as for switching and joining meetings and calls, as discussed in detail below.

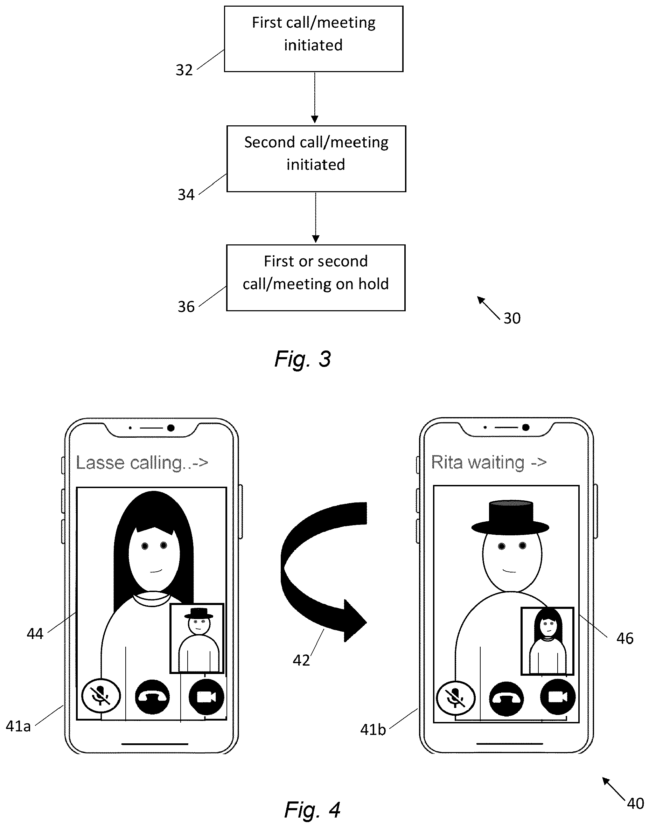

FIG. 3 is a flow chart showing an algorithm, indicated generally by the reference numeral 30, in accordance with an example embodiment.

The algorithm 30 starts at operation 32, where a first video call or meeting is initiated. At operation 34, a second video call or meeting is initiated whilst the first video call or meeting is taking place. At operation 36, one of the first and second calls or meetings is placed on hold, whilst the user engages with the other call or meeting (i.e. the one that is not on hold). The operation 36 may be implemented in many ways as discussed in detail below.

FIG. 4 shows a user device, indicated generally by the reference numeral 40, in accordance with an example embodiment. Specifically, FIG. 4 shows a first display portion 41a and a second display portion 41b of the user device. The user device 40 is rotatable (as indicated by the arrow 42) such that the user device can be rotated between a first orientation in which the first display portion 41a is visible to a user and a second orientation in which the second display portion 41b is visible to the user.

The user device 40 maybe used to implement the algorithm 30.

For example, a first video call or meeting may be initiated with a first user (Rita), thereby implementing the operation 32 of the algorithm 30. As shown in FIG. 4, the first display portion 41a is used to display a video 44 of Rita as part of the first video call or meeting.

On initiation of a second video call or meeting (the operation 34 of the algorithm 30), an indication that a second person is calling (Lasse in this example) may be presented on the first display portion 41a. By rotating the user device 40 (as indicated by the arrow 42), the second display portion 41b is used to display a video 46 of Lasse as part of the second video call or meeting, with Rita being on hold (thereby implementing operation 36 of the algorithm 30).

By performing the rotation 42, the call that was previously being on hold is activated and the previously activated call is placed on hold. Thus, the user device 40 can be used to switch between the first and second calls (e.g. call initiated in the operations 32 and 34 of the algorithm 30).

The rotation of the user device 40 (and other example embodiments described herein) has a number of potential advantages. For example, screen estate can be saved when options to switch between calls need not be presented on the display. Another example benefit is that the user need not select calls or applications separately for example in usage scenarios where the user may wish to be able to switch between calls or application but cannot use touch inputs or other user inputs on the user device. For example, in an audio call scenario when the user holds the user device 40 to their right ear so that first display portion 41a is facing the user's right ear, the first call is active and the second call is on hold, and when the user moves/rotates the user device 40 so that the second display portion 41b is facing the user's left ear, the second call is made active and the first call is placed on hold. By switching the user device (display portions) from one ear to the other the user can easily switch between the calls; this might be useful, for example, if the user is wearing gloves that would prevent easy use of typical user interfaces of the user device. Other advantages of embodiments described herein will be apparent to the skilled person.

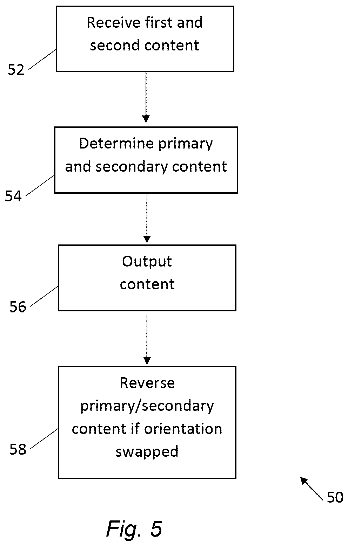

FIG. 5 is a flow chart showing an algorithm, indicated generally by the reference numeral 50, in accordance with an example embodiment.

The algorithm 50 starts at operation 52, where first and second content suitable for display on a user device (such as the user device 40) is received. The first and second content both include visual content (such as video content). As discussed further below, at least one of the first and second content may also include audio content.

At operation 54, the first content is determined to be either primary or secondary content and the second content is determined to be either primary or secondary content. More detail regarding the definition and use of primary and secondary content is provided below.

At operation 56, the first and second content are output. For example, visual components of the first and second content may be displayed on first and second display portions respectively of the user device (such as the first and second display portions 41a and 41b of the user device 40).

At operation 58, the primary and secondary content are reversed if the display orientation of the user device is swapped. Thus, content identified in the operation 54 as primary content is changed to be defined as secondary content and content identified in the operation 54 as secondary content is changed to be defined as primary content in response to the user device being rotated to swap the directions of the first and second display portions.

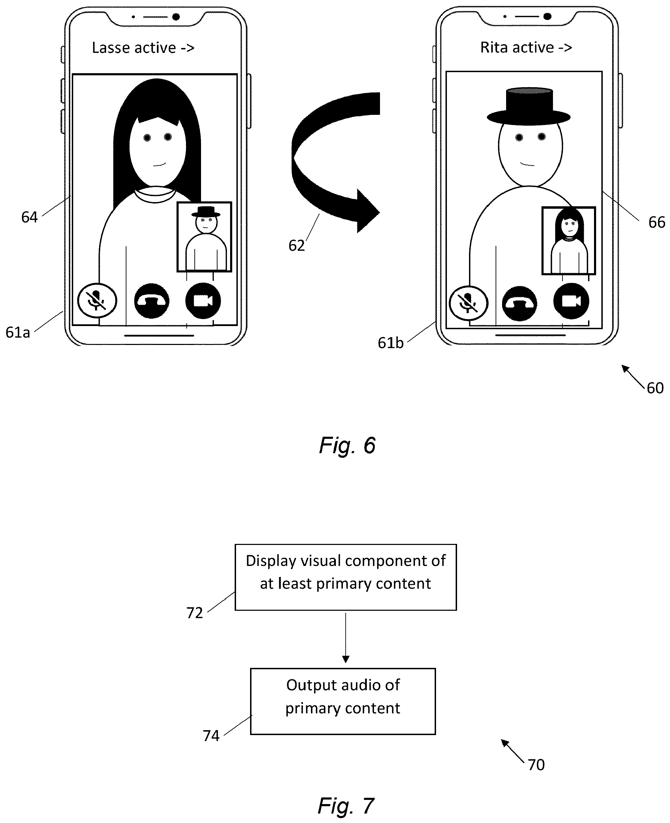

FIG. 6 shows a user device, indicated generally by the reference numeral 60, in accordance with an example embodiment. Specifically, FIG. 6 shows a first display portion 61a and a second display portion 61b of the user device 60 (that are similar to the first and second display portions 41a and 41b of the user device 40 described above). The user device 60 is rotatable (as indicated by the arrow 62) such that the user device can be rotated between a first orientation in which the first display portion 61a is visible to a user and a second orientation in which the second display portion 61b is visible to the user. In some example embodiments, a camera, a radar sensor or some other arrangement may be provided for detecting the presence of a user in order to determine which side of the user device is facing the user.

The user device 60 may be used to implement the algorithm 50 described above.

For example, two video calls or meetings may be initiated - the first with a first user (Rita) and the second with a second user (Lasse). The first and second video calls or meetings may provide the first and second content of the operation 52 of the algorithm 50. As shown in FIG. 4, the first display portion 61a is used to display a video 64 of Rita (as part of the first content) and the second display portion 61b is used to display a video 66 of Lasse (as part of the second content).

In one example embodiment, the visual content of the first content (the video call with Rita) is initially defined as primary content and the visual content of the second content (the video call with Lasse) is initially defined as secondary content, thereby implementing the operation 54 of the algorithm 50. Thus, the user device 60 initially displays the visual content of the first and second content on the first and second display portions respectively, thereby implementing operation 56 of the algorithm

Assume that the first content (the video call with Rita) is on the side of the device being viewed by a user. By rotating the user device 60 (as indicated by the arrow 62), the second content is now visible to the user. At the same time, the video call with Lasse is now defined as primary content and the video call with Rita is defined as secondary content (thereby implementing the operation 58 of the algorithm 50). As discussed further below, whether content is defined as primary or secondary content may affect the way in which audio of that content is provided.

As shown in FIG. 6, the first display portion 61a indicates that Lasse (i.e. the second content) is also active. Similarly, the second display portion 61b indicates that Rita is active. Thus, both calls can be active at the same time, rather than placing one of the calls on hold. Indeed, visual (e.g. video) data of both content can be output at the same time (although audio data for the first and second content may be handled differently, as discussed further below).

FIG. 7 is a flow chart showing an algorithm, indicated generally by the reference numeral 70, in accordance with an example embodiment. The algorithm 70 may be used to implement the operation 56 of the algorithm 50 described above.

The algorithm 70 starts at operation 72, where visual component of at least primary content is displayed using a user device (such as the user device 60). At operation 74, audio of the primary content is output.

Assume that the video call with Rita and the video call with Lasse are the first and second content respectively received in the operation 52. Assume also that the video call with Rita is initially defined as primary content and the video call with Lasse is initially defined as secondary content. In the algorithm 70, the visual component of the video call with Rita is displayed (e.g. using the first display portion 61a of the user device 60) and the audio component of the video call with Rita is also output. The visual component of the video call with Lasse may or may not be displayed, but the audio component of the video call with Lasse is not output. Thus, in one example implementation of the algorithm 70, the visual components of video calls with Rita and Lasse are provided on the first and second displays portions 61a and 61b respectively, but only the audio of the call with Rita is output. Similarly, sounds (such as user's voice) captured by one or more microphones of the user device 60) may be provided to Rita (as the source of primary content), but for Lasse (the source of secondary content) no audio would be provided (e.g. for that user's device would appear as having muted audio).

In this example, if the user device is switched so that the video call with Lasse is now primary content and the video call with Rita is secondary content, the audio for the call with Lasse will now be output (and the audio for the call with Rita will not be output, e.g. will appear to be muted).

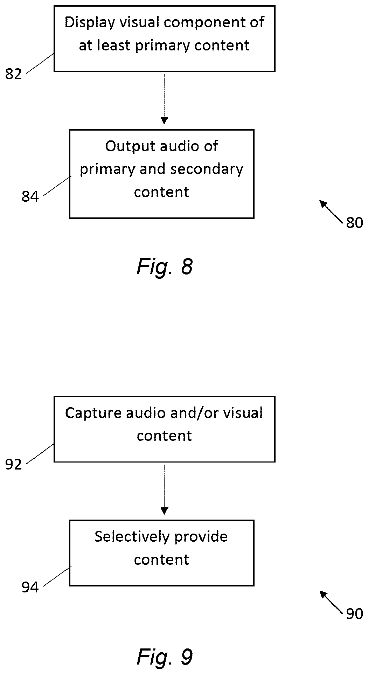

FIG. 8 is a flow chart showing an algorithm, indicated generally by the reference numeral 80, in accordance with an example embodiment. The algorithm 80 may be used to implement the operation 56 of the algorithm 50 described above (and provides an alternative to the algorithm 70 described above).

The algorithm 80 starts at operation 82, where visual component of at least primary content is displayed using a user device (such as the user device 60). The operation 82 is therefore the same as the operation 72 of the algorithm 70.

At operation 84, audio of both the primary content and the secondary content is output using the user device.

In one example implementation of the algorithm 80, a microphone of the user device may be enabled only for the video call with the primary content, but playback may be provided from both calls (e.g. the video call with Rita and the video call with Lasse) so that a user may multitask and/or participate in multiple meetings/calls at the same time. The user can then rotate/flip the user device to determine which content is "primary" content so that the user can be heard in that call.

By way of example, simultaneous audio can be provided from different content (e.g. the video calls with Rita and Lasse) in any of the following ways:
- Outputting one of the first and second audio components using a left earbud, headphone or speaker and outputting the other of the first and second audio components using a right earbud, headphone or speaker.
- Outputting a combination of the first and second audio components using spatial rendering. For example, audio of secondary content may be placed at the rear of a virtual space (and perhaps with lower volume), whilst audio for primary content is provided towards the front of the space.
- Outputting the first and second audio components at different volumes dependent on whether the respective audio component forms part of primary or secondary content (e.g. audio of secondary content may be rendered at a lower volume than audio od primary content).
- Outputting one of the first and second audio components using earbuds or headphones and outputting the other of the first and second audio components using a loudspeaker.

FIG. 9 is a flow chart showing an algorithm, indicated generally by the reference numeral 90, in accordance with an example embodiment.

The algorithm 90 starts at operation 92, where audio and/or visual content is captured (for example using the user device 60). Then, at operation 94, the captured audio and/or visual content is selectively provided to another party.

For example, in the example described above, a user of a user device is simultaneously involved with a video call or meeting with Rita and a video call or meeting with Lasse. Audio and video data for the user is captured using the user device 60 (in the operation 92), but the provision of that audio and video data to Rita and Lasse (in the operation 94) maybe dependent on factors such as whether the content provided by Rita and Lasse have been designated as primary or secondary content.

By way of example, the operation 94 may comprise controlling provision of captured audio and/or video data in any of the following ways:
- Providing captured audio and video data to the provider of content defined as primary content.
- Providing neither captured audio nor capture data to a provider of content defined as secondary content.
- Providing captured video data in blurred form to a provider of content defined as secondary content.
- Providing captured video data in a direction away from a user to a provider of content defined as secondary content.
- Providing captured video data including a blurred mouth of a user to a provider of content defined as secondary content.

For example, in the example described above, a user of a user device is simultaneously involved with a video call or meeting with Rita and a video call or meeting with Lasse. Assume that content from Rita has been defined as primary content and content from Lasse has been defined as secondary content. For the call or meeting with Lasse, a number of options exist for presenting content captured from the user. Lasse could simply be put on hold, but could alternatively see a video or blurred video feed from a back camera of the user device, or see the user but maintaining privacy with modifications e.g., blurring the mouth indicating the user being active with other call. The mode of operation may be selected automatically or could be user selected and could be changed during the call.

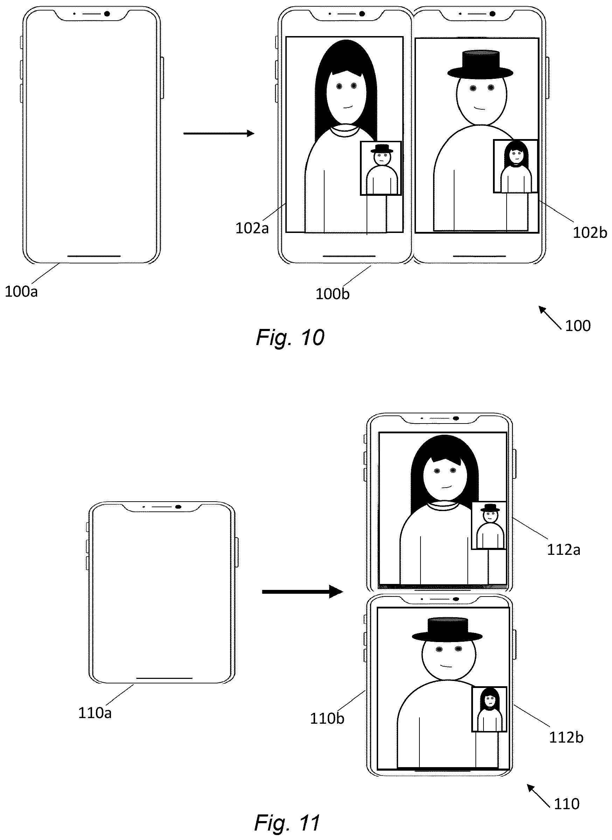

FIG. 10 shows a user device, indicated generally by the reference numeral 100, in accordance with an example embodiment. The user device is shown in a first (folded) configuration 100a and a second (unfolded) configuration 100b. In the second (unfolded) configuration, first and second display portions 102a and 102b are side-by-side.

FIG. 11 shows a user device, indicated generally by the reference numeral 110, in accordance with an example embodiment. The user device is shown in a first (folded) configuration 110a and a second (unfolded) configuration 110b. In the second (unfolded) configuration, first and second display portions 112a and 112b are provided with one on top of the other.

As discussed further below, unfolding the user device (to change from the first configuration to the second configuration) may be used to join two compatible calls, meetings, conferences or applications into a single group. Folding the device again may enable the calls, meetings, conferences or application to be separated and thus offer an intuitive and fast option to group and ungroup calls.

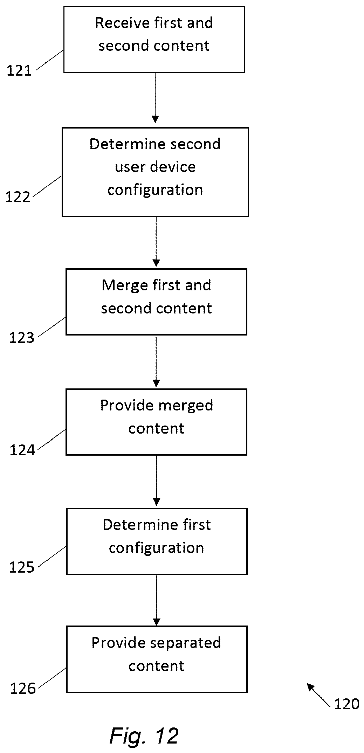

FIG. 12 is a flow chart showing an algorithm, indicated generally by the reference numeral 120, in accordance with an example embodiment. The algorithm 120 maybe implemented by the user device 100 or the user device 110 described above.

The algorithm 120 starts at operation 121, where first and second content are received. The first and second content may be defined as primary or secondary content, as discussed in detail above.

At operation 122, a change to the user device configuration to a second configuration (in which first and second display portions of the user device are directed in the same direction) is determined.

In response to the determination of the second user device configuration, the first and second content are combined into a single merged content in the operation 123. Thus, in the second configuration, the merged content is provided (in operation 124) as part of a single merged video call or meeting, conference or application.

At operation 125, a change in user device configuration from the second configuration to the first configuration (in which the first and second display portions of the user device and are directed in different directions) is determined. In response to the determination of the first user device configuration, the first and second content are separated, and provided one different sides of the user device, as discussed above (in operation 126).

In some example embodiments, in the first configuration, one of the first and second content is primary content and the other of the first and second content is secondary content and in the second configuration, both of the first and second content are primary content. The handling of video and/or audio captured by the user device may therefore be different depending on whether the user devices is in the first configuration or the second configuration.

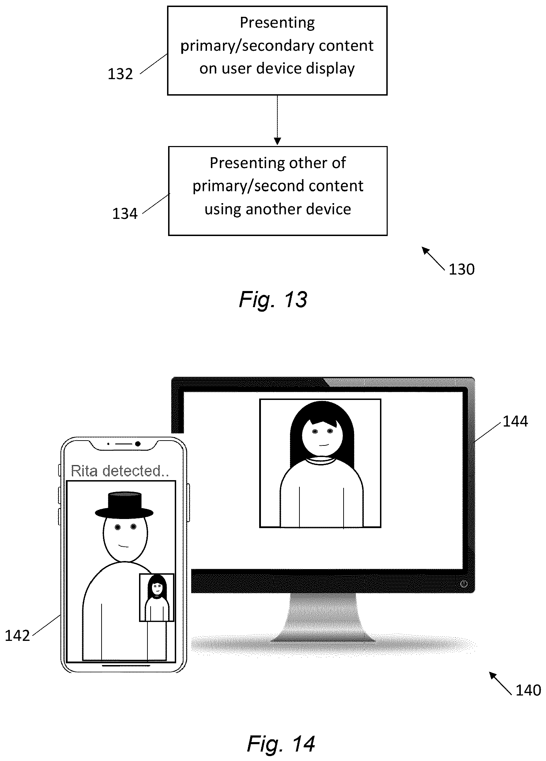

FIG. 13 is a flow chart showing an algorithm, indicated generally by the reference numeral 130, in accordance with an example embodiment.

The algorithm 130 starts at operation 132, where one of primary and secondary content is presented on a display of the user device. At operation 134, the other of the primary and secondary content is presented using another device.

In one example embodiment, the algorithm 130 is implemented by controlling presentation of the first and second content described above by presenting primary content on at least one of the display portions of the user device and providing secondary content for display using another device. In an alternative embodiment, the algorithm 130 is implemented by controlling presentation of the first and second content described above by presenting secondary content on at least one of the display portions of the user device and providing primary content for display using another device.

FIG. 14 shows a system, indicated generally by the reference numeral 140, in accordance with an example embodiment. The system 140 may be used to implement the algorithm 130 described above. The system 140 comprises a user device 142 and a monitor 144. The user device 142 maybe used to display one of primary and secondary content and the monitor 144 used to display the other of primary and secondary content, as discussed above.

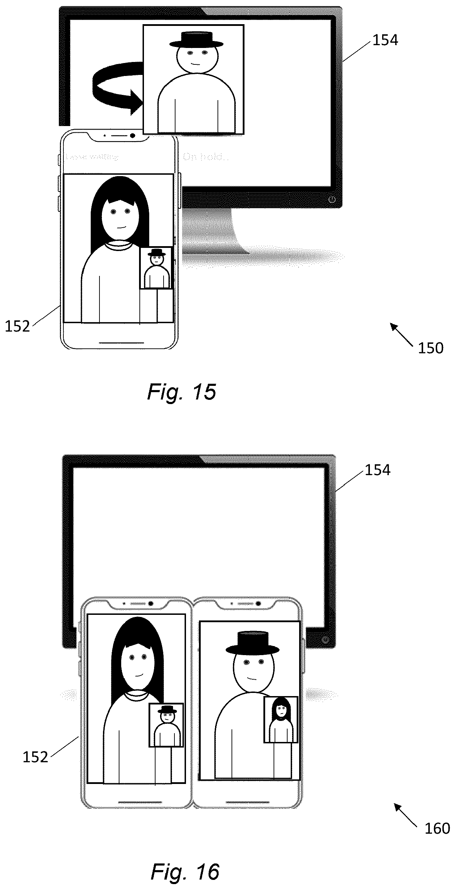

FIG. 15 shows a system, indicated generally by the reference numeral 150, in accordance with an example embodiment. The system 150 includes a user device 152 and a monitor 154 (that are similar to the user device 142 and the monitor 144 described above).

In the multi-device scenario shown in FIG. 15, the user device 142 identifies a compatible application on a secondary device (the monitor 154). For example, a device camera of the user device may identify the compatible application. By rotating/flipping the user device, content on the user device 152 and the monitor 154 can be swapped.

By way of example, the monitor 144 may be associated with a computer device that is running a compatible application to that running of the user device 142. The monitor 144 may display the output of the application running on the computer device (not shown) whilst the user device 142 displays the output of the application running on the user device. In an alternative embodiment, both applications may be running on the user device and the monitor simply used for display.

In the event that the monitor is displaying the output of an application not running on the user device (e.g. running on a computing device, such as a laptop computing device, attached to the monitor), the algorithm 130 enables the user to switch which of two calls or applications are displayed on the user device 142 and which is displayed on the monitor 144. For example, if the monitor and the user device are outputting displays of different instances of the same video conferencing software, a rotation of the user device 142 can result in the video conference call that was previously being controlled by the user device 142 being controlled by the computer device associated with the monitor 144 and vice-versa.

FIG. 16 shows a system, indicated generally by the reference numeral 160, in accordance with an example embodiment. The system 150 includes the user device 152 and monitor 154 described above. In the system 160, instead of rotating the user device 142, the user device is changed to the second configuration (in which both display portions are directed in the same direction). As a result, the user device content and the monitor content are merged into single content that is visible on the user device.

In the example described above in which the monitor 154 is displaying the output of an application not running on the user device 152 (e.g. running on a computing device, such as a laptop computing device, attached to the monitor), the content that was previously displayed using the monitor (and under the control of the local application) is merged with the content that was previously the only content displayed on the user device.

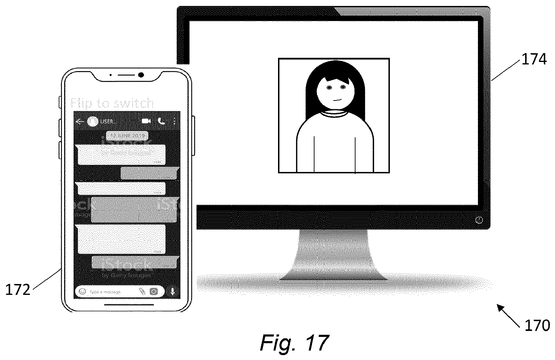

FIG. 17 shows a system, indicated generally by the reference numeral 170, in accordance with an example embodiment. The system 170 comprises a user device 172 and a monitor 174 (that are similar to the user devices 142 and 152 and the monitors 144 and 154 described above).

As discussed above with respect to FIGS. 14 to 16, application and activities may trigger options for taking/grabbing from a monitor (such as the monitor 174) to a user device (such as the user device 172), or vice-versa, by rotating/flipping the user device. This may be intuitive for the user. In the system 170, a chat-screen provided on the user device 172 is not transferred to the computer as the user is now known to go out (e.g. as indicated by a user's calendar). In response to a rotation of the user device, the application on the monitor 174 may be transferred to the user device, without the application on the user device being transferred to the monitor. Triggers may include calendar notifications, accessory provided data such as health and exercise data, contextual options such as detected common behaviour for the user, location related data etc.

Another real-world example would be working with a computer on a train. When the train reaches its destination and the user needs to leave the train, this may trigger the option to transfer content/application(s) to a mobile user device of the user.

At least some of the example embodiments described above seek to provide an intuitive arrangement for switching between applications (such as video calls and meeting) or for combining calls/meeting into a group event. Features such as audio routing seek to support multitasking.

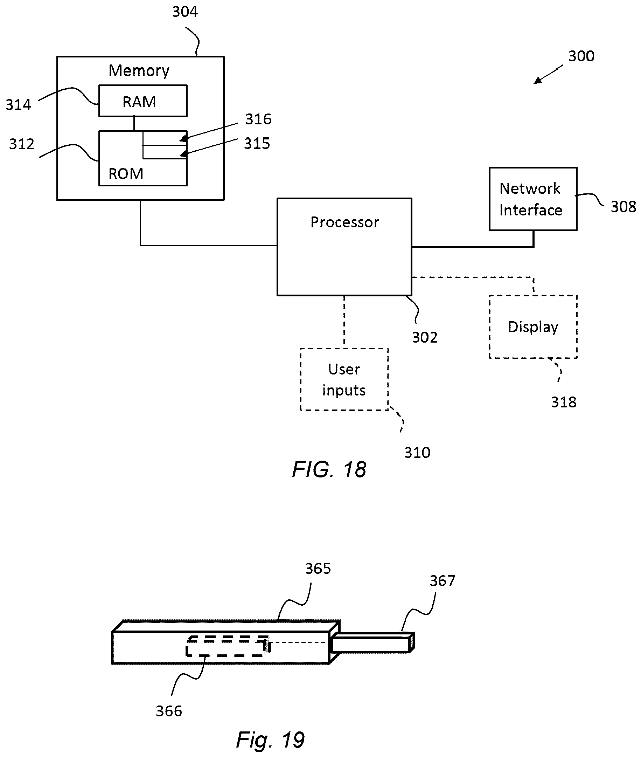

For completeness, FIG. 18 is a schematic diagram of components of one or more of the example embodiments described previously, which hereafter are referred to generically as a processing system 300. The processing system 300 may, for example, be (or may include) the apparatus referred to in the claims below.

The processing system 300 may have a processor 302, a memory 304 coupled to the processor and comprised of a random access memory (RAM) 314 and a read only memory (ROM) 312, and, optionally, a user input 310 and a display 318. The processing system 300 may comprise one or more network/apparatus interfaces 308 for connection to a network/apparatus, e.g. a modem which maybe wired or wireless. The network/apparatus interface 308 may also operate as a connection to other apparatus such as device/apparatus which is not network side apparatus. Thus, direct connection between devices/apparatus without network participation is possible.

The processor 302 is connected to each of the other components in order to control operation thereof.

The memory 304 may comprise a non-volatile memory, such as a hard disk drive (HDD) or a solid state drive (SSD). The ROM 312 of the memory 304 stores, amongst other things, an operating system 315 and may store software applications 316. The RAM 314 of the memory 304 is used by the processor 302 for the temporary storage of data. The operating system 315 may contain code which, when executed by the processor implements aspects of the methods and algorithms 30, 50, 70, 80, 90, 120 and 130 described above. Note that in the case of small device/apparatus the memory can be most suitable for small size usage i.e. not always a hard disk drive (HDD) or a solid state drive (SSD) is used.

The processor 302 may take any suitable form. For instance, it may be a microcontroller, a plurality of microcontrollers, a processor, or a plurality of processors.

The processing system 300 may be a standalone computer, a server, a console, or a network thereof. The processing system 300 and needed structural parts maybe all inside device/apparatus such as IoT device/apparatus i.e. embedded to very small size.

In some example embodiments, the processing system 300 may also be associated with external software applications. These may be applications stored on a remote server device/apparatus and may run partly or exclusively on the remote server device/apparatus. These applications maybe termed cloud-hosted applications. The processing system 300 may be in communication with the remote server device/apparatus in order to utilize the software application stored there.

FIG. 19 shows tangible media, specifically a removable memory unit 365, storing computer-readable code which when run by a computer may perform methods according to example embodiments described above. The removable memory unit 365 may be a memory stick, e.g. a USB memory stick, having internal memory 366 for storing the computer-readable code. The internal memory 366 may be accessed by a computer system via a connector 367. Other forms of tangible storage media may be used. Tangible media can be any device/apparatus capable of storing data/information which data/information can be exchanged between devices/apparatus/network.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices/apparatus and other devices/apparatus. References to computer program, instructions, code etc. should be understood to express software for a programmable processor firmware such as the programmable content of a hardware device/apparatus as instructions for a processor or configured or configuration settings for a fixed function device/apparatus, gate array, programmable logic device/apparatus, etc.

If desired, the different functions discussed herein may be performed in a different order and/or concurrently with each other. Furthermore, if desired, one or more of the above-described functions maybe optional or maybe combined. Similarly, it will also be appreciated that the flow diagrams of FIGS. 3, 5, 7 to 9, 12 and 13 are examples only and that various operations depicted therein may be omitted, reordered and/or combined.

It will be appreciated that the above described example embodiments are purely illustrative and are not limiting on the scope of the invention. Other variations and modifications will be apparent to persons skilled in the art upon reading the present specification.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

Although various aspects of the invention are set out in the independent claims, other aspects of the invention comprise other combinations of features from the described example embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

## Claims

1. An apparatus comprising means for performing:
receiving first and second content suitable for display on a user device, wherein the user device comprises a first display portion and a second display portion, wherein in a first configuration, the first and second display portions are provided on opposite sides of the user device and are directed in different directions;
determining the first content to be primary content or secondary content, wherein the first content comprises a visual component;
determining the second content to be primary content or secondary content, wherein the second content comprises a visual component;
displaying the visual component of the first content on the first display portion in the event that the first content is primary content;
displaying the visual component of the second content on the second display portion in the event that the second content is primary content; and
when the user device is in the first configuration, changing content identified as primary content to be identified as secondary content and changing content identified to be secondary content to be identified as primary content in response to the user device being rotated to swap the directions of the first and second display portions.

2. An apparatus as claimed in claim 1, wherein the first content comprises a first audio component and the second content comprises a second audio component, the apparatus further comprising means for performing:
outputting the audio component of at least content identified as primary content using the user device.

3. An apparatus as claimed in claim 2, further comprising means for performing:
outputting the audio component of both the first and the second content using the user device.

4. An apparatus as claimed in claim 3, wherein outputting the audio component of both the first and second content using the user device comprises at least one of:
outputting one of the first and second audio components using a left earbud, headphone or speaker and outputting the other of the first and second audio components using a right earbud, headphone or speaker;
outputting a combination of the first and second audio components using spatial rendering;
outputting the first and second audio components at different volumes dependent on whether the respective audio component forms part of primary or secondary content; or
outputting one of the first and second audio components using earbuds or headphones and outputting the other of the first and second audio components using a loudspeaker.

5. An apparatus as claimed in any one of the preceding claims, further comprising means for performing:
capturing audio data and/or video data using said user device; and
controlling provision of the captured audio and/or video data to at least one of a provider of the first content and a provider of the second content dependent on whether the respective content is primary or secondary content.

6. An apparatus as claimed in claim 5, wherein controlling provision of the captured audio and/or video data to at least one of a provider of the first content and a provider of the second content dependent on whether the respective content is primary or secondary content comprises at least one of:
providing the captured audio and/or video data to the provider of first and/or second content in the event that the respective content is primary content;
providing neither captured audio nor captured video data to the provider of first and/or second content in the event that the respective content is secondary content;
providing the captured video data in blurred form to the provider of first and/or second content in the event that the respective content is secondary content;
providing captured video data in a direction away from a user to the provider of first and/or second content in the event that the respective content is secondary content; or
providing the captured video data including a blurred mouth of a user to the provider of first and/or second content in the event that the respective content is secondary content.

7. An apparatus as claimed in any one of the preceding claims, further comprising means for performing:
determining a change in user device configuration from the first configuration to a second configuration, wherein in the second configuration, the first and second display portions are directed in the same direction; and
combining the first and second content into a single merged content when the user device configuration changes to the second configuration, wherein, in the second configuration, the merged content is provided as part of a single merged video call, meeting, conference or application.

8. An apparatus as claimed in claim 7, wherein:
in the first configuration, one of the first and second content is primary content and the other of the first and second content is secondary content; and
in the second configuration, both of the first and second content are primary content.

9. An apparatus as claimed in any one of the preceding claims, wherein controlling presentation of the first and second content comprises means for performing:
presenting primary content on at least one of the first and second display portions of the user device and providing secondary content for display using another device.

10. An apparatus as claimed in any one of claims 1 to 8, wherein controlling presentation of the first and second content comprises means for performing:
presenting secondary content on at least one of the first and second display portions of the user device and providing primary content for display using another device.

11. A user device comprising a first display portion and a second display portion, wherein in a first configuration, the first and second display portions are provided on opposite sides of the user device and are directed in different directions, wherein the user device comprises means for performing:
receiving first and second content suitable for display on the user device, wherein the first content comprises a visual component and is primary content or secondary content and the second content comprises a visual component and is primary content or secondary content;
displaying the visual component of the first content on the first display portion in the event that the first content is primary content;
displaying the visual component of the second content on the second display portion in the event that the second content is primary content; and
when the user device is in the first configuration, changing contented identified as primary content to be identified secondary content and changing content identified to be secondary content to be identified as primary content in response to the user device being rotated to swap the directions of the first and second display portions.

12. An apparatus or a user device as claimed in any one of the preceding claims, further comprising means for performing:
displaying the visual component of the first and second content on the first and second display portions respectively, regardless of whether said content is primary content or secondary content.

13. An apparatus or a user device as claimed in any one of the preceding claims, wherein:
the first content comprises one or more of: a video call, a meeting, an application and interactive content; and/or
the second content comprises one or more of: a video call, a meeting, an application and interactive content.

14. A method comprising:
receiving first and second content suitable for display on a user device, wherein the user device comprises a first display portion and a second display portion, wherein in a first configuration, the first and second display portions are provided on opposite sides of the user device and are directed in different directions;
determining the first content to be primary content or secondary content, wherein the first content comprises a visual component;
determining the second content to be primary content or secondary content, wherein the second content comprises a visual component;
displaying the visual component of the first content on the first display portion in the event that the first content is primary content;
displaying the visual component of the second content on the second display portion in the event that the second content is primary content; and
when the user device is in the first configuration, changing content identified as primary content to be identified as secondary content and changing content identified to be secondary content to be identified as primary content in response to the user device being rotated to swap the directions of the first and second display portions.

15. A computer program comprising instructions for causing an apparatus to perform at least the following:
receiving first and second content suitable for display on a user device, wherein the user device comprises a first display portion and a second display portion, wherein in a first configuration, the first and second display portions are provided on opposite sides of the user device and are directed in different directions;
determining the first content to be primary content or secondary content, wherein the first content comprises a visual component;
determining the second content to be primary content or secondary content, wherein the second content comprises a visual component;
displaying the visual component of the first content on the first display portion in the event that the first content is primary content;
displaying the visual component of the second content on the second display portion in the event that the second content is primary content; and
when the user device is in the first configuration, changing content identified as primary content to be identified as secondary content and changing content identified to be secondary content to be identified as primary content in response to the user device being rotated to swap the directions of the first and second display portions.
